# EUROPEAN PATENT APPLICATION

(11) **EP 4 836 048 A1**
(43) Date of publication of application: **04.11.2026**
(21) Application number: 23963194.8
(22) Date of filing: 28.12.2023
(51) Int. Cl.: H01M 10/052, H01M 4/58, H01M 10/0567, H01M 10/0568, H01M 10/0569

(54) **LITHIUM SECONDARY BATTERY**

(71) Applicant: TERAWATT TECHNOLOGY K.K., Yokohama-shi, Kanagawa 226-0026 (JP)
(72) Inventor: TAKIMOTO, Kazuki, Yokohama-shi, Kanagawa 226-0026 (JP); OYAMA, Gosuke, Yokohama-shi, Kanagawa 226-0026 (JP)
(74) Representative: FRKelly
(86) International application number: PCT/JP2023/047211
(87) International publication number: WO 2025/141848

(57) **Abstract**

The present invention provides a lithium secondary battery having excellent cycle characteristics. The present invention relates to a lithium secondary battery containing: a negative-electrode active material containing Si; and an electrolyte solution, in which an average particle diameter of the negative-electrode active material is 5.0 µm or more and 30 µm or less, the electrolyte solution includes LiFSI, LiPF₆, and LiPO₂F₂ as lithium salts, and when a molar fraction of LiFSI is denoted as x, a molar fraction of LiPF₆ is denoted as y, a molar fraction of LiPO₂F₂ is denoted as z, and x + y + z = 1 is satisfied, ranges of 0.05 ≤ x ≤ 0.95, 0.05 ≤ y ≤ 0.90, and 0.005 ≤ z ≤ 0.35 are satisfied, and a concentration of lithium ions in the electrolyte solution is 0.7 M or more and 3.0 M or less.

## Description

### Technical Field

The present invention relates to a lithium secondary battery.

### Background Art

In the related art, a technique of converting natural energy such as sunlight or wind power into electrical energy has attracted attention. In association with this, various secondary batteries have been developed as a power storage device which has high safety and can store a large amount of electrical energy.

Among these, it is known that a lithium secondary battery that carries out charging/discharging by moving lithium ions between a positive electrode and a negative electrode exhibits a high voltage and a high energy density. As a typical lithium secondary battery, a lithium-ion secondary battery (lithium-ion battery: LIB) is known, which has an active material capable of holding a lithium element in a positive electrode and a negative electrode, and carries out charging/discharging by transferring lithium ions between the positive-electrode active material and the negative-electrode active material.

In addition, in order to increase the energy density and improve the production, a lithium secondary battery (lithium metal battery: LMB) using a lithium metal as a negative-electrode active material instead of a material capable of intercalating lithium ions, such as a carbon material, or a lithium secondary battery (anode-free battery: AFB) using a negative electrode consisting of a negative electrode current collector not having a negative-electrode active material such as a carbon material or a lithium metal has been developed.

On the other hand, in a lithium secondary battery capable of achieving a high voltage, there is a problem in that the cycle characteristics of the lithium secondary battery are deteriorated due to high reactivity between a member of the battery and an electrolyte solution. Specifically, when charging/discharging is repeatedly carried out, a side reaction occurs between a negative electrode material, a positive electrode material, or the like and the electrolyte solution, and the battery capacity is reduced. Therefore, it is required to devise a method for preventing such a decrease in battery capacity.

For example, for the purpose of improving the heated storage performance, high-temperature cycle performance, and power performance of a lithium-ion battery, Patent Literature 1 discloses an electrolyte solution containing an electrolyte salt and an organic solvent, in which the electrolyte salt includes a lithium salt, the organic solvent includes a cyclic ether, and 0.2 ≤ W1/W2 ≤ 1.06 is satisfied when a mass fraction of the lithium salt with respect to the electrolyte solution is denoted as W1 and a mass fraction of the cyclic ether with respect to the electrolyte solution is denoted as W2.

In addition, for the purpose of achieving both a low internal resistance, high-temperature storage performance, and high-temperature cycle performance of a battery, Patent Literature 2 discloses an electrolyte solution containing an electrolyte salt and an organic solvent, in which the electrolyte salt includes lithium bis(fluorosulfonyl)imide, a mass% content of the lithium bis(fluorosulfonyl)imide in the electrolyte solution is 4.5% to 11%, the organic solvent includes ethylene carbonate, and the electrolyte solution satisfies 0.9 ≤ WLiFSI/(16.77% - WEC) ≤ 2.9 (where WLiFSI is a mass% content of the lithium bis(fluorosulfonyl)imide in the electrolyte solution, and WEC is a mass% content of the ethylene carbonate in the electrolyte solution).

### Citation List

### Patent Literatures

Patent Literature 1: PCT Japanese Translation Patent Publication No. 2023-537443
Patent Literature 2: PCT Japanese Translation Patent Publication No. 2023-520319

### Summary of Invention

### Technical Problem

However, in a lithium secondary battery containing an active material containing Si, Si is likely to expand and contract when the battery is repeatedly charged/discharged, and thus the decrease in capacity and cycle life is further remarkable.

The present invention has been made in view of the above circumstances, and an object of the present invention is to provide a lithium secondary battery having improved cycle characteristics.

### Solution to Problem

A lithium secondary battery according to one embodiment of the present invention is a lithium secondary battery containing: a negative-electrode active material containing Si; and an electrolyte solution, in which an average particle diameter of the negative-electrode active material is 5.0 µm or more and 30 µm or less, the electrolyte solution includes LiFSI, LiPF₆, and LiPO₂F₂ as lithium salts, and when a molar fraction of LiFSI is denoted as x, a molar fraction of LiPF₆ is denoted as y, a molar fraction of LiPO₂F₂ is denoted as z, and x + y + z = 1 is satisfied, ranges of 0.05 ≤ x ≤ 0.95, 0.05 ≤ y ≤ 0.90, and 0.005 ≤ z ≤ 0.35 are satisfied, and a concentration of lithium ions in the electrolyte solution is 0.7 M or more and 3.0 M or less.

### Advantageous Effect of Invention

According to the present invention, it is possible to provide a lithium secondary battery having excellent cycle characteristics.

### Brief Description of Drawings

[Figure 1] Figure 1 is a schematic view illustrating an example of a lithium secondary battery according to the present invention.

### Description of Embodiments

Hereinafter, embodiments for carrying out the present invention (hereinafter, simply referred to as "the present embodiment") will be described in detail. However, the present invention is not limited to the following present embodiments. The present invention can be modified in various ways without departing from the gist thereof. It is noted that, in the drawings, the same elements will be denoted by the same reference numerals, and redundant descriptions thereof will be omitted. In addition, positional relationships such as up, down, left, and right are based on the positional relationships illustrated in the drawings unless otherwise specified. Further, the dimensional ratios in the drawings are not limited to the illustrated ratios.

### 1. Lithium secondary battery

A basic configuration of a lithium secondary battery according to one embodiment of the present invention will be described with reference to Figure 1. For example, as illustrated in Figure 1, the lithium secondary battery according to one embodiment of the present invention includes a plurality of negative electrodes 10, a plurality of separators 20, and a plurality of positive electrodes 30, and the negative electrode 10 and the positive electrode 30 are disposed to be spaced apart from each other with the separator 20 being interposed therebetween. Hereinafter, each configuration will be described in detail.

### 1.1. Negative electrode

The negative electrode 10 usually includes a negative electrode current collector and a negative-electrode active material layer formed on the negative electrode current collector. The negative electrode 10 according to the present embodiment includes a negative-electrode active material layer containing a negative-electrode active material containing Si (hereinafter, also simply referred to as "Si active material") and a negative electrode current collector.

The negative-electrode active material is a material that causes an electrode reaction, that is, an oxidation reaction and a reduction reaction, in the negative electrode 10. The negative-electrode active material according to the present embodiment contains the Si active material and may contain, as necessary, another negative-electrode active material that does not contain Si. Si has a high theoretical Li intercalation capacity per weight, and thus a lithium secondary battery having a high capacity can be obtained by containing the Si active material.

The Si active material is an active material containing an Si element, and examples thereof include Si, Li_{y}-SiOₓ, SiC, and SiOₓ. The Si active material preferably includes Li_{y}-SiOₓ or SiC, and more preferably includes Li_{y}-SiOₓ. By containing such a Si active material, the battery tends to have excellent cycle characteristics and to be capable of increasing the capacity. In addition, Li_{y}-SiOₓ is preferable because the irreversible capacity during the first charging/discharging is smaller than that of SiOₓ and the energy density can be increased.

In the present embodiment, the average particle diameter of the Si active material is 5.0 µm or more and 30 µm or less, and preferably 7.0 µm or more and 20 µm or less, or 8.0 µm or more and 15 µm or less. By setting the average particle diameter of the Si active material to 5.0 µm or more, the increase in electric resistance tends to be capable of being suppressed by suppressing a side reaction with components of the electrolyte solution, and by setting the average particle diameter to 30 µm or less, the volume change during charging/discharging of the charged/discharged battery tends to be capable of being suppressed. It is noted that, in the present embodiment, the particle size distribution is measured using "MT-3000 manufactured by MicrotracBEL Corp.", which is a laser diffraction particle size distribution analyzer.

The content (use amount) of the Si active material is preferably 1% by mass or more and 90% by mass or less, 3% by mass or more and 80% by mass or less, or 5% by mass or more and 70% by mass or less with respect to the total amount of the negative-electrode active material. By setting the use amount of the Si active material within the above-described range, the balance between the energy density and the cycle life tends to be achieved. From the same viewpoint, the content (use amount) of the Si active material with respect to 100 parts by mass of the negative-electrode active material composition excluding the solvent component is preferably 2 parts by mass or more and 90 parts by mass or less, 5 parts by mass or more and 80 parts by mass or less, or 7 parts by mass or more and 70 parts by mass or less.

Examples of the other negative-electrode active material that does not contain an Si element include carbon-based active materials such as graphite, graphene, hard carbon, and carbon nanotubes; metal oxide-based active materials such as a titanium oxide-based compound and a cobalt oxide-based compound; and metals of germanium, tin, lead, aluminum, and gallium, and metal/alloy-based active materials in which these are pre-doped with lithium. From the viewpoint of more effectively and reliably exhibiting the effect of the present invention, it is preferable to use a carbon-based active material together with the Si active material, and among the carbon-based active materials, graphite is preferable.

The content of the other negative-electrode active material is preferably 10% by mass or more and 99% by mass or less, 30% by mass or more and 97% by mass or less, or 80% by mass or more and 95% by mass or less with respect to the total amount of the negative-electrode active material. By setting the content of the other negative-electrode active material within the above-described range, the balance between the energy density and the cycle life tends to be achieved. From the same viewpoint, the content (use amount) of the other negative-electrode active material with respect to 100 parts by mass of the negative-electrode active material composition excluding the solvent component is preferably 10 parts by mass or more and 95 parts by mass or less, 30 parts by mass or more and 90 parts by mass or less, or 50 parts by mass or more and 85 parts by mass or less.

The formation of the negative-electrode active material layer may be carried out by mixing the negative-electrode active material with a solvent, an additive, a binder, a conductive auxiliary agent, or the like, and then applying the mixture onto one surface or both surfaces of the negative electrode current collector and carrying out pressing. The solvent is not particularly limited, and for example, water is used. The additive is not particularly limited, and for example, a binder such as carboxymethyl cellulose (CMC) or styrene-butadiene rubber (SBR) may be used, or a conductive auxiliary agent such as carbon black, carbon nanofibers (VGCF), single-walled carbon nanotubes (SWCNT), or multi-walled carbon nanotubes (MWCNT) may be used.

When forming the negative-electrode active material layer, the negative-electrode active material composition is applied onto one surface or both surfaces of the negative electrode current collector. The amount of the negative-electrode active material composition to be applied is preferably 1 mg/cm² or more and 30 mg/cm² or less, 2 mg/cm² or more and 25 mg/cm² or less, or 3 mg/cm² or more and 20 mg/cm² or less in terms of weight per unit area of one surface. When the coating amount of the negative-electrode active material composition is set within the above-described range, the cycle characteristics of the battery tend to be further improved.

The thickness of the negative-electrode active material layer is preferably 20 µm or more and 200 µm or less, 30 µm or more and 175 µm or less, or 40 µm or more and 150 µm or less. When the thickness of the negative-electrode active material layer is set within the above-described range, the cycle characteristics of the battery tend to be further improved.

Examples of the negative electrode current collector include a metal foil and a current collector film having a metal layer on both surfaces of a resin layer. Examples of the metal foil include a copper foil. In the present embodiment, from the viewpoint of ease of processing, high energy density, and the like, a current collector film having a metal layer on both surfaces of a resin layer is preferable. The current collector film for a negative electrode is preferably a film having a layer of metallic copper on both surfaces of a resin layer.

In the current collector film for a negative electrode, the resin layer preferably contains at least one selected from the group consisting of polyethylene terephthalate (PET), polypropylene, polyamide, acrylic resin, polycarbonate, polyethylene, polyvinyl chloride, and polystyrene, and more preferably consists of polyethylene terephthalate or polypropylene. By using such a resin layer, the cycle characteristics of the battery tend to be further improved.

In the current collector film for a negative electrode, the resin layer preferably has a film shape (sheet shape), and the thickness thereof is preferably 2.0 µm or more and 20 µm or less, 3.0 µm or more and 10 µm or less, or 4.0 µm or more and 7.0 µm or less. When the thickness of the resin layer is set within the above-described range, the cycle characteristics of the battery tend to be further improved.

In the current collector film for a negative electrode, the metal layer is preferably a copper (Cu) layer, and the copper layer refers to a copper layer in which the content of the Cu element in the layer is 99% by mass or more, 99.9% by mass or more, 99.99% by mass or more, or 99.9999% by mass or more. The thickness per layer of the above-described metal layer or copper layer is preferably 0.2 µm or more and 10 µm or less, 0.3 µm or more and 5.0 µm or less, 0.5 µm or more and 3.0 µm or less, or 0.8 µm or more and 2.0 µm or less. When the thickness of the above-described metal layer or copper layer is set within the above-described range, the cycle characteristics of the battery tend to be further improved.

### 1.2. Electrolyte solution

The electrolyte solution according to the present embodiment contains LiFSI, LiPF₆, and LiPO₂F₂ as lithium salts, and when a molar fraction of LiFSI is denoted as x, a molar fraction of LiPF₆ is denoted as y, a molar fraction of LiPO₂F₂ is denoted as z, and x + y + z = 1 is satisfied, ranges of 0.05 ≤ x ≤ 0.95, 0.05 ≤ y ≤ 0.90, and 0.005 ≤ z ≤ 0.35 are satisfied, and a concentration of lithium ions in the electrolyte solution is 0.7 M or more and 3.0 M or less. It is noted that LiFSI means LiN(SO₂F)₂.

In the related art, it has been known that, when a negative-electrode active material containing Si is used, the Li intercalation capacity per weight is high, and thus a lithium secondary battery having a high capacity is easily obtained. On the other hand, Si is a material in which the volume expansion due to the repeated charging/discharging of the battery is severe, and thus there is a problem in that the electric resistance increases and the life of the battery is shortened. As a result of intensive studies on this point, the inventors of the present invention have found that, by setting the type and concentration of the salt used in the electrolyte solution to the above-described ones, the influence of the volume expansion of Si can be reduced, and thus a lithium secondary battery having a long life can be obtained.

The factor is not necessarily clear; however, it is presumed as follows. In a lithium-ion secondary battery, LiPF₆, which is a lithium salt that is generally used, exhibits excellent performance as an electrolyte. However, when the temperature rises due to the repeated charging/discharging, the side reaction with Si becomes active, and thus the function as the electrolyte solution tends to be impaired. Here, it is considered that a case where LiFSI and LiPO₂F₂ are simultaneously contained as the lithium salt contributes to the fact that the ion dissociation properties can be maintained while the side reaction of the electrolyte solution is suppressed even when the temperature rises. Further, by satisfying the above-described ranges of the proportions of LiFSI, LiPF₆, and LiPO₂F₂ and the concentration of lithium ions in the electrolyte solution, not only the side reaction with Si can be suppressed, but also the side reaction with the material of the positive electrode 30 can be suppressed, which is further suitable for maintaining the cycle characteristics of the battery and the battery capacity. As described above, in the lithium secondary battery according to the present embodiment, the above-described configurations act synergistically, and as a result, the cycle characteristics are excellent. However, the factor is not limited to the above-described one.

### 1.2.1. Lithium salt

The electrolyte solution according to the present embodiment contains LiFSI, LiPF₆, and LiPO₂F₂ as the lithium salt, and may contain other salts as necessary. Examples of the other salts include lithium salts such as LiI, LiCl, LiBr, LiF, LiBF₄, LiAsF₆, LiSO₃CF₃, LiN(SO₂CF₃)₂, LiN(SO₂CF₃CF₃)₂, LiBF₂(C₂O₄), LiB(O₂C₂H₄)₂, LiB(O₂C₂H₄)F₂, LiB(OCOCF₃)₄, LiNO₃, and Li₂SO₄, and salts of metals such as Na, K, Ca, and Mg.

In the electrolyte solution according to the present embodiment, when a molar fraction of LiFSI is denoted as x, a molar fraction of LiPF₆ is denoted as y, a molar fraction of LiPO₂F₂ is denoted as z, and x + y + z = 1 is satisfied, ranges of 0.05 ≤ x ≤ 0.95, 0.05 ≤ y ≤ 0.90, and 0.005 ≤ z ≤ 0.35 are satisfied. The molar fraction x of LiFSI is preferably 0.06 ≤ x ≤ 0.90, 0.10 ≤ x ≤ 0.80, or 0.30 ≤ x ≤ 0.70. The molar fraction y of LiPF₆ is preferably 0.06 ≤ y ≤ 0.70, 0.10 ≤ y ≤ 0.50, or 0.20 ≤ y ≤ 0.40. The molar fraction z of LiPO₂F₂ is preferably 0.008 ≤ z ≤ 0.30, 0.01 ≤ z ≤ 0.25, or 0.03 ≤ z ≤ 0.18. When the molar fractions of LiFSI, LiPF₆, and LiPO₂F₂ are within the above-described ranges, the side reaction with the negative electrode material and the positive electrode material is suppressed, and the battery tends to have more excellent cycle characteristics.

The concentration of lithium ions in the electrolyte solution is 0.7 M or more and 3.0 M or less, preferably 0.8 M or more and 2.5 M or less, 1.0 M or more and 2.0 M or less, or 1.3 M or more and 1.7 M or less. When the concentration of lithium ions is set within the above-described range, the battery tends to have more excellent cycle characteristics.

The concentration of LiFSI in the electrolyte solution is preferably 0.1 M or more and 2.0 M or less, 0.3 M or more and 1.5 M or less, or 0.5 M or more and 1.2 M or less. When the concentration of LiFSI is set within the above-described range, the battery tends to have more excellent cycle characteristics.

The concentration of LiPF₆ in the electrolyte solution is preferably 0.1 M or more and 2.0 M or less, 0.2 M or more and 1.0 M or less, or 0.3 M or more and 0.8 M or less. When the concentration of LiPF₆ is set within the above-described range, the battery tends to have more excellent cycle characteristics.

The concentration of LiPO₂F₂ in the electrolyte solution is preferably 0.01 M or more and 1.0 M or less, 0.03 M or more and 0.8 M or less, or 0.05 M or more and 0.4 M or less. When the concentration of LiPO₂F₂ is set within the above-described range, the battery tends to have more excellent cycle characteristics.

In the electrolyte solution, the concentration of the other salts other than LiFSI, LiPF₆, and LiPO₂F₂ is preferably 1.0 M or less, 0.8 M or less, or 0.6 M or less. When the concentration of the other salts is set within the above-described range, the cycle characteristics of the battery tend to be further improved. The concentration of the other salts in the electrolyte solution may be, for example, 0 M, and may be 0 M or more, 0.0001 M or more, 0.001 M or more, or 0.005 M or more.

### 1.2.2. Solvent

The solvent of the electrolyte solution is not particularly limited as long as it is configured to dissolve the lithium salt according to the present embodiment. Examples of such a solvent include a chain-like or cyclic carbonate compound, an ether compound, and a chain-like or cyclic fluorine compound in which one or more hydrogen atoms of a carbon skeleton are substituted with a fluorine atom. It is noted that the solvent of the electrolyte solution may be used alone or in a combination of two or more types thereof.

The solvent of the electrolyte solution preferably includes at least one of a chain-like carbonate compound, a cyclic carbonate compound, a chain-like fluorine compound, and a cyclic fluorine compound, more preferably includes at least one of a chain-like carbonate compound, a cyclic carbonate compound, and a cyclic fluorine compound, still more preferably includes a chain-like carbonate compound, a cyclic carbonate compound, and a cyclic fluorine compound, and even more preferably includes a chain-like carbonate compound, a cyclic carbonate compound, a chain-like fluorine compound, and a cyclic fluorine compound. When the solvent is configured as described above, the effect of improving the cycle characteristics according to the present invention tends to be more remarkable.

The chain-like carbonate compound is a carbonate compound in which one or more hydrogen atoms of a carbon skeleton are not substituted with a fluorine atom and which does not have a cyclic structure such as an aromatic ring, an alicyclic ring, a homocyclic ring, or a heterocyclic ring. Examples of the chain-like carbonate compound include dimethyl carbonate, ethyl methyl carbonate, diethyl carbonate, propylene carbonate, and chloroethylene carbonate. Dimethyl carbonate or ethylene carbonate is preferably included, and dimethyl carbonate and ethylene carbonate are more preferably included. When the chain-like carbonate compound is included, the effect of improving the cycle characteristics according to the present invention tends to be more remarkable.

The cyclic carbonate compound is a carbonate compound in which one or more hydrogen atoms of a carbon skeleton are not substituted with a fluorine atom and which has a cyclic structure such as an aromatic ring, an alicyclic ring, a homocyclic ring, or a heterocyclic ring. Examples of the cyclic carbonate compound include ethylene carbonate and propylene carbonate. Among these, it is preferable to include ethylene carbonate. When the cyclic carbonate compound is included, the effect of improving the cycle characteristics according to the present invention tends to be more remarkable.

The chain-like fluorine compound is a compound which does not have a cyclic structure such as an aromatic ring, an alicyclic ring, a homocyclic ring, or a heterocyclic ring, and in which one or more hydrogen atoms of a carbon skeleton are substituted with a fluorine atom. Examples of the chain-like fluorine compound include 1,1,2,2-tetrafluoroethyl-2,2,2-trifluoroethyl ether, 1,2-bis(1,1,2,2-tetrafluoroethoxy)ethane, methyl perfluoroisobutyl ether, ethyl nonafluoroisobutyl ether, 1,1,1,2,2,3,4,5,5,5-decafluoro-3-methoxy-4-(trifluoromethyl)pentane, 1,1,2,2-tetrafluoroethyl-2,2,3,3-tetrafluoropropyl ether, 1,1,2,2-tetrafluoroethoxy-2,2,3,3-tetrafluoropropoxymethane, methyl-1,1,2,2-tetrafluoroethyl ether, ethyl-1,1,2,2-tetrafluoroethyl ether, and propyl-1,1,2,2-tetrafluoroethyl ether. Among these, a chain-like fluorine compound having an ether group is preferable, and it is more preferable to include at least one selected from the group consisting of 1,1,2,2-tetrafluoroethyl-2,2,2-trifluoroethyl ether, 1,2-bis(1,1,2,2-tetrafluoroethoxy)ethane, methyl perfluoroisobutyl ether, ethyl nonafluoroisobutyl ether, and 1,1,1,2,2,3,4,5,5,5-decafluoro-3-methoxy-4-(trifluoromethyl)pentane, and it is still more preferable to include 1,1,2,2-tetrafluoroethyl-2,2,2-trifluoroethyl ether, 1,2-bis(1,1,2,2-tetrafluoroethoxy)ethane, or ethyl nonafluoroisobutyl ether. When the chain-like fluorine compound is included, the effect of improving the cycle characteristics according to the present invention tends to be more remarkable.

The cyclic fluorine compound is a compound which has a cyclic structure such as an aromatic ring, an alicyclic ring, a homocyclic ring, or a heterocyclic ring, and in which one or more hydrogen atoms of a carbon skeleton are substituted with a fluorine atom. Examples of the cyclic fluorine compound include fluoroethylene carbonate, 1,1,2,2,3,3,4-heptafluorocyclopentane, hexadecafluoro(1,3-dimethylcyclohexane), tetradecafluoromethylcyclohexane, fluorocyclohexane, fluorocyclopentane, and octadecafluorodecahydronaphthalene. Among these, fluoroethylene carbonate is preferable. When the cyclic fluorine compound is included, the effect of improving the cycle characteristics according to the present invention tends to be more remarkable.

The electrolyte solution according to the present embodiment contains a chain-like fluorine compound having at least one of monovalent groups represented by Formulae (A) to (D), and a content of the chain-like fluorine compound is preferably 0.5% by mass or more and 30% by mass or less, more preferably 1% by mass or more and 25% by mass or less, and still more preferably 3% by mass or more and 20% by mass or less with respect to the total amount of components other than the chain-like fluorine compound in the electrolyte solution. When the chain-like fluorine compound is included, the cycle characteristics of the lithium secondary battery tend to be further improved. It is noted that a wavy line in the formulae represents a bonding site in the monovalent group.

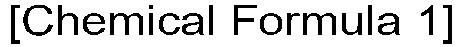

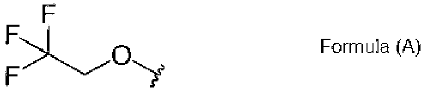

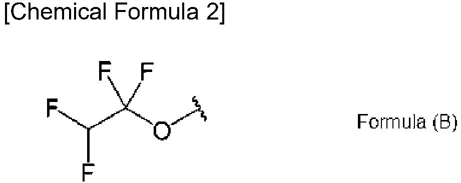

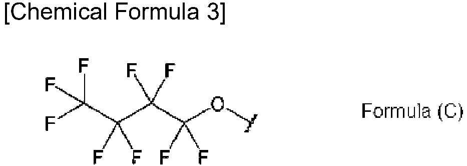

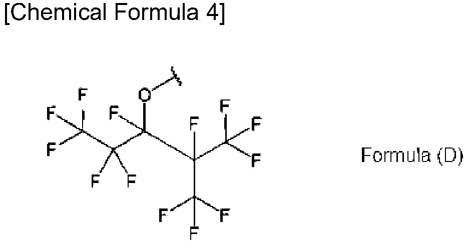

The electrolyte solution preferably contains a chain-like fluorine compound having Formula (A), Formula (B), or Formula (C), and more preferably contains a chain-like fluorine compound having Formula (A) or Formula (B). When the chain-like fluorine compound having such a structure is included, the cycle characteristics of the lithium secondary battery tend to be further improved.

The electrolyte solution according to the present embodiment preferably contains a chain-like or cyclic fluorinated carbonate. When the chain-like or cyclic fluorinated carbonate is included, the effect of improving the cycle characteristics according to the present invention tends to be more remarkable. From the same viewpoint, it is preferable to include fluoroethylene carbonate as the chain-like or cyclic fluorinated carbonate.

The ether compound is a compound that has an ether group and is not fluorinated. Examples of the ether compound include 1,2-dimethoxyethane (DME), 1,2-diethoxyethane (DEE), 1,2-dimethoxypropane (DMP), diethylene glycol dimethyl ether, triethylene glycol dimethyl ether, tetraethylene glycol dimethyl ether, 1,3-dimethoxypropane, 1,4-dimethoxybutane, 1,1-dimethoxyethane, 2,2-dimethoxypropane, 1,2-diethoxybutane, and 2,3-diethoxybutane.

The content of the carbonate compound is preferably 30% by mass or more and 100% by mass or less, 35% by mass or more and 95% by mass or less, 45% by mass or more and 90% by mass or less, or 55% by mass or more and 85% by mass or less with respect to the total amount of the electrolyte solution. When the content of the carbonate compound is set within the above-described range, the effect of improving the cycle characteristics according to the present invention tends to be more remarkable. It is noted that the carbonate compound includes both a fluorinated carbonate compound and a non-fluorinated carbonate compound.

The content of the chain-like carbonate compound is preferably 10% by volume or more and 60% by volume or less, 20% by volume or more and 50% by volume or less, or 25% by volume or more and 45% by volume or less with respect to the total amount of the chain-like carbonate compound and the cyclic carbonate compound. When the content of the chain-like carbonate compound is set within the above-described range, the effect of improving the cycle characteristics according to the present invention tends to be more remarkable. It is noted that the chain-like carbonate compound includes both a fluorinated chain-like carbonate compound and a non-fluorinated chain-like carbonate compound.

The content of the cyclic carbonate compound is preferably 5% by volume or more and 60% by volume or less, 10% by volume or more and 50% by volume or less, or 20% by volume or more and 40% by volume or less with respect to the total amount of the chain-like carbonate compound and the cyclic carbonate compound. When the content of the cyclic carbonate compound is set within the above-described range, the effect of improving the cycle characteristics according to the present invention tends to be more remarkable. It is noted that the cyclic carbonate compound includes both a fluorinated cyclic carbonate compound and a non-fluorinated cyclic carbonate compound.

The content of the chain-like fluorine compound is preferably 0% by mass or more and 50% by mass or less, 0% by mass or more and 40% by mass or less, 1% by mass or more and 30% by mass or less, or 3% by mass or more and 25% by mass or less with respect to the total amount of the chain-like carbonate compound and the cyclic carbonate compound. When the content of the chain-like fluorine compound is set within the above-described range, the effect of improving the cycle characteristics according to the present invention tends to be more remarkable.

The content of the cyclic fluorine compound is preferably 0% by mass or more and 30% by mass or less, 1% by mass or more and 20% by mass or less, or 3% by mass or more and 10% by mass or less with respect to the total amount of the chain-like carbonate compound and the cyclic carbonate compound. When the content of the cyclic fluorine compound is set within the above-described range, the effect of improving the cycle characteristics according to the present invention tends to be more remarkable.

The content of the fluorinated carbonate is preferably 0% by mass or more and 30% by mass or less, 1% by mass or more and 20% by mass or less, or 3% by mass or more and 10% by mass or less with respect to the total amount of the chain-like carbonate compound and the cyclic carbonate compound. When the content of the fluorinated carbonate is set within the above-described range, the effect of improving the cycle characteristics according to the present invention tends to be more remarkable.

### 1.3. Separator

The separator 20 according to the present embodiment is not particularly limited as long as it has a function of physically and/or electrically isolating the positive electrode 30 and the negative electrode 10 and has a function of ensuring ionic conductivity of lithium ions. Examples of such a separator include an insulating porous member, a polymer electrolyte, a gel electrolyte, and an inorganic solid electrolyte, and typical examples thereof include at least one selected from the group consisting of a porous member having insulating properties, a polymer electrolyte, and a gel electrolyte. In addition, as the separator 20, one type of member may be used alone, or two or more types of members may be used in combination.

As the separator 20, the insulating porous member, the polymer electrolyte, or the gel electrolyte is preferably used alone or in a combination of two or more types thereof. It is noted that, when the insulating porous member is used alone as the separator 20, the lithium secondary battery needs to further include an electrolyte solution.

The above-described polymer electrolyte is not particularly limited, and examples thereof include a solid polymer electrolyte mainly including a polymer and an electrolyte, and a semi-solid polymer electrolyte mainly including a polymer, an electrolyte, and a plasticizer.

The above-described gel electrolyte is not particularly limited, and examples thereof include a gel electrolyte mainly including a polymer and a liquid electrolyte (that is, a solvent and an electrolyte).

The polymer that can be included in the polymer electrolyte and the gel electrolyte is not particularly limited, and examples thereof include a polymer including a functional group including an oxygen atom, such as an ether and an ester, a halogen group, and a polar group such as a cyano group. Specific examples thereof include a resin having an ethylene oxide unit in a main chain and/or a side chain, such as polyethylene oxide (PEO), a resin having a propylene oxide unit in a main chain and/or a side chain, such as polypropylene oxide (PPO), an acrylic resin, a vinyl resin, an ester resin, a nylon resin, polyvinylidene fluoride (PVdF), polyacrylonitrile (PAN), polysiloxane, polyphosphazene, polymethyl methacrylate, polyamide, polyimide, aramid, and polytetrafluoroethylene. Such a resin as described above may be used alone or in a combination of two or more types thereof.

Examples of the electrolytes included in the polymer electrolyte and the gel electrolyte include salts of Li, Na, K, Ca, Mg, and the like. Typically, in the present embodiment, the polymer electrolyte and the gel electrolyte include a lithium salt. The lithium salt is not particularly limited, and may be, for example, any lithium salt that can be contained in the above-described electrolyte solution. Such a salt or lithium salt may be used alone or in a combination of two or more types thereof.

A blending ratio of the polymer and the lithium salt in the polymer electrolyte and the gel electrolyte may be determined by a ratio of the polar group included in the polymer to the lithium atom included in the lithium salt. For example, when the polymer has an oxygen atom, the blending ratio may be determined by a ratio ([Li]/[O]) of the number of lithium atoms included in the lithium salt to the number of oxygen atoms included in the polymer. In the polymer electrolyte and the gel electrolyte, the blending ratio of the polymer and the lithium salt can be adjusted so that the above-described ratio ([Li]/[O]) is, for example, 0.02 or more and 0.20 or less, 0.03 or more and 0.15 or less, or 0.04 or more and 0.12 or less.

The solvent included in the gel electrolyte is not particularly limited, and for example, one type of solvent that can be included in the electrolyte solution described above can be used alone, or two or more types thereof can be used in combination. Preferred examples of the solvent are also the same as those in the above-described electrolyte solution.

The plasticizer included in the semi-solid polymer electrolyte is not particularly limited, and examples thereof include the same components as the solvents that can be included in the gel electrolyte and various oligomers.

When the separator 20 includes an insulating porous member, the pores of the member are filled with a substance having ionic conductivity, whereby the member exhibits ionic conductivity. As a result, in the present embodiment, the pores thereof are filled with, for example, the electrolyte solution according to the present embodiment, the gel electrolyte including the electrolyte solution according to the present embodiment, and the like.

The material constituting the insulating porous member is not particularly limited, and examples thereof include an insulating polymer material. Specific examples thereof include polyethylene (PE) and polypropylene (PP). That is, the separator 20 may be a porous polyethylene (PE) film, a porous polypropylene (PP) film, or a laminated structure thereof.

### 1.4. Positive electrode

The positive electrode 30 according to the present embodiment has a positive electrode current collector and a positive-electrode active material layer. The average thickness of the positive electrode 30 is not particularly limited, and is, for example, 20 µm or more and 100 µm or less, 30 µm or more and 80 µm or less, or 40 µm or more and 70 µm or less. However, the average thickness of the positive electrode 30 can be appropriately adjusted according to the desired capacity of the battery.

The positive electrode current collector according to the present embodiment may have a positive electrode current collector film including a resin layer containing polyethylene terephthalate and metal layers provided on both surfaces of the resin layer, or may have a metal layer without having the resin layer. When the positive electrode current collector film is provided, the metal layers are formed on the surfaces on both sides of the resin layer by vapor deposition, sputtering, electroplating, bonding using an adhesive, or the like.

The resin layer of the positive electrode current collector is an insulator, and prevents the metal layers provided on both surfaces of the resin layer from being conductive to each other. The resin constituting the resin layer is not particularly limited, and may be formed of, for example, a sheet-shaped (film-shaped) or fibrous resin. The resin may include at least one selected from the group consisting of polyethylene terephthalate (PET), polypropylene, polyamide, acrylic resin, polycarbonate, polyethylene, polyvinyl chloride, and polystyrene. The above-described resin may be used alone or in a combination of two or more types thereof.

The resin layer of the positive electrode current collector may appropriately contain other additives according to desired physical properties, in addition to the above-described resin. The additive is not particularly limited, and examples thereof include a coloring agent, a flame retardant, a surfactant, and the like.

The thickness of the resin layer of the positive electrode current collector is, for example, 2 µm or more and 15 µm or less, 3 µm or more and 12 µm or less, or 4 µm or more and 10 µm or less.

The metal layer of the positive electrode current collector functions to be in physical and/or electrical contact with the positive-electrode active material layer and to transfer electrons to and from the positive-electrode active material layer. The metal layer of the positive electrode current collector is formed of a conductor such as a metal that does not react with lithium in the battery. The metal constituting the metal layer of the positive electrode current collector is not particularly limited, and is at least one selected from the group consisting of aluminum, titanium, stainless steel, nickel, and alloys thereof. Among these, aluminum or an aluminum alloy is preferable, and aluminum is particularly preferable from the viewpoint of more effectively and reliably exhibiting the effect of the present invention. The metal may be used alone or in a combination of two or more types thereof. It is noted that, in the present specification, the "metal that does not react with lithium" means a metal that does not form an alloy by reacting with lithium ions or a lithium metal under the operating conditions of the lithium secondary battery.

When the positive electrode current collector has the positive electrode current collector film, the thickness of the metal layer is not particularly limited, and is, for example, 0.1 µm or more and 4.0 µm or less, 0.2 µm or more and 3.0 µm or less, 0.3 µm or more and 2.5 µm or less, or 0.4 µm or more and 2.0 µm or less.

When the positive electrode current collector has the metal layer without having the resin layer, the thickness of the metal layer is not particularly limited, and is, for example, 4.0 µm or more and 20.0 µm or less, 6.0 µm or more and 17.5 µm or less, or 8.0 µm or more and 15.0 µm or less.

The positive-electrode active material is a material that causes an electrode reaction, that is, an oxidation reaction and a reduction reaction, in the positive electrode 30. The positive-electrode active material according to the present embodiment is not particularly limited, and for example, the positive-electrode active material is contained in a positive-electrode active material composition containing a binder, a conductive auxiliary agent, a positive-electrode sacrificial agent, and other additives, and the positive-electrode active material composition is applied onto at least one surface or both surfaces of the positive electrode current collector, followed by press molding, thereby disposing the positive-electrode active material layer on at least one surface or both surfaces of the positive electrode current collector.

The method of disposing the positive-electrode active material layer on the positive electrode current collector is not limited to press molding, and examples thereof include a method of curing the positive-electrode active material composition by containing a thermosetting compound in the positive-electrode active material composition and heating the composition, a method of curing the positive-electrode active material composition by containing a photocurable compound in the positive-electrode active material composition and irradiating the composition with light, a method of curing the positive-electrode active material composition by subjecting the positive-electrode active material composition to two-liquid mixing as a two-liquid curable composition, and the like.

The positive-electrode active material layer according to the present embodiment may contain one or more compounds represented by General Formula: Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B).

In addition, preferably, the positive-electrode active material layer contains one or more compounds represented by General Formula: Li_{z}NiₓCo_{y}M_{1-x-y}O_{2+α} (here, 0.7 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B). By containing the above-described compound having a high nickel ratio as the positive-electrode active material, the energy density of the lithium secondary battery tends to be further improved. In addition, when the nickel ratio is increased, the redox shuttle reaction is more likely to occur; however, the reaction is suppressed when the electrolyte solution contains the additive described in detail below, and the excellent performance stability at a high temperature tends to be exhibited.

Other positive-electrode active materials other than the above-described compound may be contained as the positive-electrode active material. Specifically, examples of the other positive-electrode active materials according to the present embodiment include a host material for a lithium element (typically, a lithium ion). Such other positive-electrode active materials are not particularly limited, and examples thereof include a metal oxide and a metal phosphate. The metal oxide is not particularly limited, and examples thereof include a cobalt oxide-based compound, a manganese oxide-based compound, a nickel oxide-based compound, and the like. The metal phosphate is not particularly limited, and examples thereof include an iron phosphate-based compound and a cobalt phosphate-based compound. Typical examples of the other positive-electrode active materials include LiNi_{0.8}Co_{0.15}Al_{0.05}O₂, LiCoO₂, LiNiₓMn_{y}O (x + y = 1), LiNiO₂, LiMn₂O₄, LiFePO, LiCoPO, LiFeOF, LiNiOF, and TiS₂. The other positive-electrode active materials may be used alone or in a combination of two or more types thereof.

The positive-electrode active material composition may contain a binder. When the binder is contained, the positive-electrode active material layer is more easily bound to the positive electrode current collector, and the flexibility is improved after the positive-electrode active material layer is disposed on the positive electrode current collector.

The binder for the positive electrode according to the present embodiment is not particularly limited, and examples thereof include polyvinylidene fluoride; modified polyvinylidene fluoride in which a functional group such as a hydroxyl group, an amino group, a carbonyl group, a carboxyl group, a phenyl group, or a methyl group is introduced into polyvinylidene fluoride; polytetrafluoroethylene; modified polytetrafluoroethylene in which a functional group such as a hydroxyl group, an amino group, a carbonyl group, a carboxyl group, a phenyl group, or a methyl group is introduced into polytetrafluoroethylene; a block copolymer, a random copolymer, or a graft copolymer, which has tetrafluoroethylene as a constitutional unit; styrene-butadiene rubber; carboxymethyl cellulose; an acrylic resin; a polyimide resin; and the like. The binder may be used alone or in a combination of two or more types thereof.

The positive-electrode active material composition according to the present embodiment may contain a positive-electrode sacrificial agent. The positive-electrode sacrificial agent according to the present embodiment is a lithium-containing compound that causes an oxidation reaction in a charge/discharge potential range of the positive-electrode active material and substantially does not cause a reduction reaction. The positive-electrode sacrificial agent is not particularly limited, and examples thereof include a lithium oxide such as Li₂O₂; a lithium nitride such as Li₃N; a lithium sulfide-based solid solution such as Li₂S-P₂S₅, Li₂S-LiCl, Li₂S-LiBr, or Li₂S-LiI; an iron-based lithium oxide such as Li₁₊ₓ(Ti_{1-y}Fe_{y})₁₋ₓO₂ (0 < x ≤ 0.25, 0.4 < y ≤ 0.9), Li₂₋ₓTi_{1-z}Fe_{z}O_{3-y} (0 ≤ x < 2, 0 ≤ y ≤ 1, 0.05 ≤ z ≤ 0.95), or Li₅FeO₄; and the like. The positive-electrode sacrificial agent may be used alone or in a combination of two or more types thereof.

### 2. Method for manufacturing lithium secondary battery

The method for manufacturing a lithium secondary battery is not particularly limited as long as it is a method capable of manufacturing a lithium secondary battery having the above-described configuration of the battery. Examples thereof include the following method.

The above-described negative electrode 10, separator 20, and positive electrode 30 are prepared. The reagent or the like, which is used for each of the constitutional members or the members, may be manufactured by a known method in the related art, or a commercially available product may be used. The positive electrode 30, the separator 20, and the negative electrode 10 prepared as described above are stacked in this order so that the positive electrode 30 and the separator 20 face each other, thereby obtaining a stacked body. A lithium secondary battery can be obtained by sealing the obtained stacked body in a sealing container together with the electrolyte solution according to the present embodiment. The sealing container is not particularly limited, and examples thereof include a laminated film.

In addition, as illustrated in Figure 1, the plurality of the positive electrodes 30 and the plurality of the negative electrodes 10 may be alternately stacked with the separator 20 being sandwiched between the positive electrode 30 and the negative electrode 10, and as a result, the battery performance such as the energy density tends to be further improved. As the stacking method, for example, the negative electrode 10 and the positive electrode 30 may be wrapped to face the opposite side of the separator 20 without being in contact with each other, and the separator 20 may be stacked without being cut. Such stacking is preferable from the viewpoint of preventing a short circuit and improving productivity.

Although not illustrated in the drawings, the negative electrode 10 according to the present embodiment has the negative-electrode active material layer containing the Si active material. Therefore, the negative-electrode active material layer is obtained by applying a negative-electrode active material composition obtained by mixing the above-described negative-electrode active material, a binder, an additive, a conductive auxiliary agent, a solvent, and the like, onto both surfaces or one surface of the negative electrode current collector, and then carrying out press molding. The obtained molded body is punched into a predetermined size by punching processing to obtain the negative electrode 10 according to the present embodiment.

The shape of the battery of the lithium secondary battery according to the present embodiment is not particularly limited, and may be, for example, a sheet type, a stacked sheet type, or may have a thin shape, a bottomed cylindrical shape, a bottomed angular shape, or the like. From the viewpoint of more effectively and reliably exhibiting the effect of the present embodiment, a sheet type, a stacked sheet type, or a thin shape is preferable.

### EXAMPLES

Hereinafter, the present invention will be described in more detail with reference to Examples. However, the present invention is not limited to these Examples.

### 1. Production of lithium secondary battery

Lithium-ion secondary batteries of Examples 1 to 15 and Comparative Examples 1 to 11 were produced as follows.

### 1.1. Preparation of negative electrode

A negative electrode current collector was prepared by subjecting both surfaces of a polyethylene terephthalate (PET) film having a thickness of 6.0 µm to vapor deposition to have a copper layer having a thickness of 1.0 µm. Then, a negative-electrode active material composition was prepared by mixing 18 parts by mass of an Si-containing active material having a particle diameter shown in Table 1 as a negative-electrode active material, 75 parts by mass of graphite as another negative-electrode active material, 2 parts by mass of carbon black as a conductive auxiliary agent, and 1 part by mass of carboxymethyl cellulose (CMC) and 4 parts by mass of styrene-butadiene rubber (SBR) as binders, in 100 parts by mass of water as a solvent. This composition was applied onto each of both the surfaces of the negative electrode current collector so that the weight per unit area was 6.2 mg/cm², and then pressing was carried out to carry out cutting into a size of 4.4 cm x 4.4 cm. By ultrasonic welding, a metal sheet for a negative electrode (copper foil having a thickness of 4.0 µm) was attached to each of end portions of the negative electrode 10 obtained by the above-described method.

### 1.2. Preparation of separator

A sheet (thickness: 15 µm, 4.8 cm x 4.8 cm) of a polyethylene microporous membrane having a surface coated with a mixture of polyvinylidene fluoride (PVDF) and Al₂O₃ was prepared as the separator 20.

### 1.3. Preparation of positive electrode

As a positive electrode current collector, a current collector film in which aluminum as a metal layer was subjected to vapor deposition to a thickness of 1.0 µm on both surfaces of a PET film having a thickness of 6.0 µm as a resin layer was used. Then, a positive-electrode active material composition was prepared by mixing 96 parts by mass of LiNi_{0.8}Co_{0.15}Al_{0.05}O₂ as a positive-electrode active material, 2 parts by mass of carbon black as a conductive auxiliary agent, and 2 parts by mass of polyvinylidene fluoride (PVDF) as a binder in N-methyl-pyrrolidone (NMP) as a solvent. This positive-electrode active material composition was applied onto each of both the surfaces of the positive electrode current collector so that the weight per unit area was 15 mg/cm², and then pressing was carried out to form a positive-electrode active material layer on both surfaces of the positive electrode current collector, thereby obtaining a molded body. This molded body was cut into a predetermined size (4 cm x 4 cm) to obtain the positive electrode 30.

### 1.4. Preparation of electrolyte solution

Ethylene carbonate (EC), dimethyl carbonate (DMC), and ethyl methyl carbonate (EMC) were mixed at a volume ratio of 30:35:35, respectively, thereby preparing a solvent solution. As a solvent to be further added, 5% by mass (wt%) of fluoroethylene carbonate (FEC) and an amount (wt%) of hydrofluoroether (HFE) shown in Table 1 were added with respect to the total amount of the solvent solution. As a compound of the hydrofluoroether (HFE), 1,1,2,2-tetrafluoroethyl-2,2,2-trifluoroethyl ether was used as "HFE1", 1,2-bis(1,1,2,2-tetrafluoroethoxy)ethane was used as "HFE2", or ethyl nonafluoroisobutyl ether was used as "HFE3".

Lithium bis(fluorosulfonyl)imide (LiFSI), lithium hexafluorophosphate (LiPF₆), and lithium difluorophosphate (LiPO₂F₂) were dissolved as lithium salts in the above-described solution so that the molar fractions and the lithium ion concentrations shown in Table 1 were obtained. In this case, the lithium salt was not completely dissolved in Comparative Example 8, and thus the production of the lithium secondary battery was not carried out.

### 1.5. Assembly of battery

The negative electrode 10, the separator 20, and the positive electrode 30, which were obtained as described above, were stacked a plurality of times in the order illustrated in Figure 1 to obtain a stacked body. Then, the lead portions of the stacked positive electrode and negative electrode were joined by ultrasonic welding to an Al terminal of 100 µm for the positive electrode and a Ni terminal of 100 µm for the negative electrode, respectively, followed by being inserted into a laminated exterior body. Next, the electrolyte solution obtained above was injected into the exterior body and sealed to obtain a lithium-ion secondary battery of each of Examples and Comparative Examples.

### 2. Evaluation of lithium secondary battery

### [Capacity retention rate]

The lithium secondary battery obtained above was initially charged at a current of 23 mA until the voltage reached 4.2 V in an environment of 45°C, and then was initially discharged at a current of 23 mA until the voltage reached 2.7 V. Next, a cycle (first cycle) of carrying out CC charging at a current of 460 mA until the voltage reached 4.2 V and then carrying out CC discharging at a current of 460 mA until the voltage reached 2.7 V was carried out in an environment of 45°C.

Subsequently, the cycle was carried out 299 times, and the cycle was repeated a total of 300 times. In the above-described cycle of Examples and Comparative Examples, the capacity retention rate was determined by dividing the capacity determined from the CC discharging of the 300th cycle by the capacity determined from the CC discharging of the first cycle. The results are shown in Table 1.

**[Table 1]**

| | Si-containing active material | | Lithium salt | | | | Additive | | Capacity retention rate (%) |
|---|---|---|---|---|---|---|---|---|---|
| | Type | Particle diameter (µm) | Lithium ion concentration (mol/L) | LiFSI | LiPF₆ | LiPO₂F ₂ | HFE type | HFE (wt/% ) | |
| | | | | x | y | z | | | |
| Example 1 | Li-SiOx | 10.5 | 1.38 | 0.652 | 0.290 | 0.058 | - | - | 86 |
| Example 2 | Li-SiOx | 12.0 | 1.38 | 0.652 | 0.290 | 0.058 | - | - | 87 |
| Example 3 | Li-SiOx | 8.5 | 1.38 | 0.652 | 0.290 | 0.058 | - | - | 86 |
| Example 4 | Li-SiOx | 8.5 | 2.40 | 0.417 | 0.417 | 0.167 | - | - | 87 |
| Example 5 | Li-SiOx | 8.5 | 1.68 | 0.060 | 0.893 | 0.048 | - | - | 86 |
| Example 6 | Li-SiOx | 8.5 | 1.68 | 0.893 | 0.060 | 0.048 | - | - | 87 |
| Example 7 | Li-SiOx | 8.5 | 1.38 | 0.290 | 0.652 | 0.058 | - | - | 85 |
| Example 8 | Li-SiOx | 8.5 | 1.31 | 0.687 | 0.305 | 0.008 | - | - | 84 |
| Example 9 | Li-SiOx | 8.5 | 1.70 | 0.529 | 0.235 | 0.235 | - | - | 86 |
| Example 10 | Li-SiOx | 8.5 | 1.38 | 0.652 | 0.290 | 0.058 | HFE1 | 1 | 92 |
| Example 11 | Li-SiOx | 8.5 | 1.38 | 0.652 | 0.290 | 0.058 | HFE1 | 5 | 93 |
| Example 12 | Li-SiOx | 8.5 | 1.38 | 0.652 | 0.290 | 0.058 | HFE1 | 30 | 90 |
| Example 13 | Li-SiOx | 8.5 | 1.38 | 0.652 | 0.290 | 0.058 | HFE2 | 10 | 92 |
| Example 14 | Li-SiOx | 8.5 | 1.38 | 0.652 | 0.290 | 0.058 | HFE3 | 10 | 92 |
| Example 15 | SiC | 8.5 | 1.38 | 0.652 | 0.290 | 0.058 | - | - | 86 |
| Comparative Example 1 | Li-SiOx | 1.0 | 1.38 | 0.652 | 0.290 | 0.058 | - | - | 73 |
| Comparative Example 2 | Si | 0.1 | 1.38 | 0.652 | 0.290 | 0.058 | - | - | 51 |
| Comparative Example 3 | Si | 45.0 | 1.38 | 0.652 | 0.290 | 0.058 | - | - | 21 |
| Comparative Example 4 | SiOx | 3.0 | 1.38 | 0.652 | 0.290 | 0.058 | - | - | 66 |
| Comparative Example 5 | Li-SiOx | 8.5 | 1.08 | 0.000 | 0.926 | 0.074 | - | - | 76 |
| Comparative Example 6 | Li-SiOx | 8.5 | 1.30 | 0.692 | 0.308 | 0.000 | - | - | 78 |
| Comparative Example 7 | Li-SiOx | 8.5 | 1.10 | 0.273 | 0.273 | 0.455 | - | - | 75 |
| Comparative Example 8 | Li-SiOx | 8.5 | 3.50 | 0.429 | 0.429 | 0.143 | - | - | - |
| Comparative Example 9 | Li-SiOx | 8.5 | 0.61 | 0.492 | 0.492 | 0.016 | - | - | 74 |
| Comparative Example 10 | Li-SiOx | 8.5 | 1.38 | 0.652 | 0.290 | 0.058 | HFE1 | 50 | 60 |
| Comparative Example 11 | Li-SiOx | 8.5 | 1.38 | 0.652 | 0.290 | 0.058 | HFE1 | 0.1 | 73 |

As shown in Table 1, in Examples 1 to 15 which are lithium secondary batteries containing: a negative-electrode active material containing Si; and an electrolyte solution, in which an average particle diameter of the negative-electrode active material is 5.0 µm or more and 30 µm or less, the electrolyte solution includes LiFSI, LiPF₆, and LiPO₂F₂ as lithium salts, and when a molar fraction of LiFSI is denoted as x, a molar fraction of LiPF₆ is denoted as y, a molar fraction of LiPO₂F₂ is denoted as z, and x + y + z = 1 is satisfied, ranges of 0.05 ≤ x ≤ 0.95, 0.05 ≤ y ≤ 0.90, and 0.005 ≤ z ≤ 0.35 are satisfied, and a concentration of lithium ions in the electrolyte solution is 0.7 M or more and 3.0 M or less, it has been confirmed that the lithium secondary batteries have excellent cycle characteristics due to a high capacity retention rate as compared with Comparative Examples 1 to 11 in which the above-described configuration was not adopted.

### <Appendix>

The embodiment according to the present disclosure includes the following aspects.
[1] A lithium secondary battery containing:
   a negative-electrode active material containing Si;
   and an electrolyte solution,
   in which an average particle diameter of the negative-electrode active material is 5.0 µm or more and 30 µm or less,
   the electrolyte solution includes LiFSI, LiPF₆, and LiPO₂F₂ as lithium salts, and
   when a molar fraction of LiFSI is denoted as x, a molar fraction of LiPF₆ is denoted as y, a molar fraction of LiPO₂F₂ is denoted as z, and x + y + z = 1 is satisfied, ranges of 0.05 ≤ x ≤ 0.95, 0.05 ≤ y ≤ 0.90, and 0.005 ≤ z ≤ 0.35 are satisfied, and a concentration of lithium ions in the electrolyte solution is 0.7 M or more and 3.0 M or less.
[2] The lithium secondary battery according to [1],
   in which the electrolyte solution contains a chain-like fluorine compound having at least one of monovalent groups represented by Formula (A) to Formula (D), and
   a content of the chain-like fluorine compound is 0.5% by mass or more and 30% by mass or less with respect to a total amount of components other than the chain-like fluorine compound in the electrolyte solution,
[3] The lithium secondary battery according to [1] or [2],
   in which the negative-electrode active material contains Li_{y}-SiOₓ or SiC.
[4] The lithium secondary battery according to any one of [1] to [3],
   in which the concentration of the lithium ions is 1.0 M or more and 2.5 M or less.
[5] The lithium secondary battery according to any one of [1] to [4],
   in which the average particle diameter of the negative-electrode active material is 7.0 µm or more and 20 µm or less.
[6] The lithium secondary battery according to any one of [1] to [5],
   in which the electrolyte solution contains a fluorinated carbonate.
[7] The lithium secondary battery according to any one of [1] to [6],
   in which the electrolyte solution contains a chain-like fluorine compound A having Formula (A) or Formula (B).

### Industrial Applicability

The lithium secondary battery according to the present invention has excellent cycle characteristics, and thus has industrial applicability as a power storage device used for various applications.

### Reference Signs List

10: negative electrode
20: separator
30: positive electrode

## Claims

1. A lithium secondary battery comprising:
a negative-electrode active material containing Si; and
an electrolyte solution,
wherein an average particle diameter of the negative-electrode active material is 5.0 µm or more and 30 µm or less,
the electrolyte solution includes LiFSI, LiPF₆, and LiPO₂F₂ as lithium salts, and
when a molar fraction of LiFSI is denoted as x, a molar fraction of LiPF₆ is denoted as y, a molar fraction of LiPO₂F₂ is denoted as z, and x + y + z = 1 is satisfied, ranges of 0.05 ≤ x ≤ 0.95, 0.05 ≤ y ≤ 0.90, and 0.005 ≤ z ≤ 0.35 are satisfied, and a concentration of lithium ions in the electrolyte solution is 0.7 M or more and 3.0 M or less.

2. The lithium secondary battery according to Claim 1,
wherein the electrolyte solution contains a chain-like fluorine compound having at least one of monovalent groups represented by Formula (A) to Formula (D), and
a content of the chain-like fluorine compound is 0.5% by mass or more and 30% by mass or less with respect to a total amount of components other than the chain-like fluorine compound in the electrolyte solution, 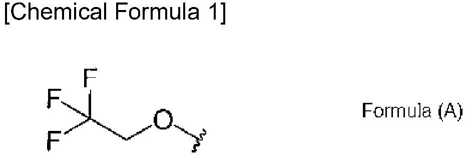 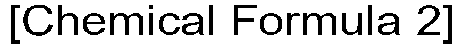 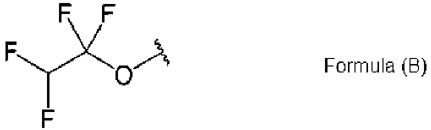 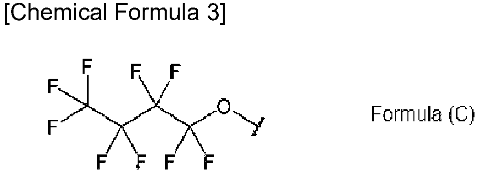 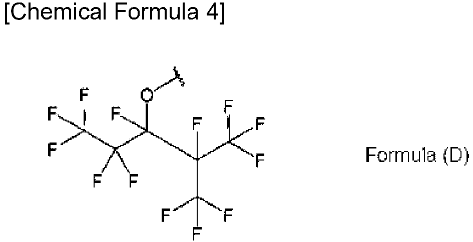
(here, a wavy line in the formulae represents a bonding site in the monovalent group).

3. The lithium secondary battery according to Claim 1,
wherein the negative-electrode active material contains Li_{y}-SiOₓ or SiC.

4. The lithium secondary battery according to Claim 1,
wherein the concentration of the lithium ions is 1.0 M or more and 2.0 M or less.

5. The lithium secondary battery according to Claim 1,
wherein the average particle diameter of the negative-electrode active material is 7.0 µm or more and 20 µm or less.

6. The lithium secondary battery according to Claim 1,
wherein the electrolyte solution contains a fluorinated carbonate.

7. The lithium secondary battery according to Claim 1,
wherein the electrolyte solution contains a chain-like fluorine compound A having Formula (A) or Formula (B).
